# FASCICULE DE BREVET EUROPEEN

(11) **EP 4 505 403 B1**
(45) Date de publication et mention de la délivrance du brevet: **09.12.2026**
(21) Numéro de dépôt: 23722921.6
(22) Date de dépôt: 06.04.2023
(51) Int. Cl.: G06T 7/00, G06T 7/70

(54) **PROCÉDÉ D'ESTIMATION DE LA QUALITÉ D'UN FLUX D'OBJETS DANS UNE LIGNE DE TRI**
VERFAHREN ZUR SCHÄTZUNG DER QUALITÄT EINES STROMS VON OBJEKTEN IN EINER SORTIERLINIE
METHOD FOR ESTIMATING THE QUALITY OF A STREAM OF OBJECTS IN A SORTING LINE

(30) Priorité: 07.04.2022 FR 2203182
(43) Date de publication de la demande: 12.02.2025
(73) Titulaire: Suez, 92040 Paris La Défense Cédex (FR); Suez RV France, 92040 Paris La Défense Cédex (FR)
(72) Inventeur: CUSSONNEAU, Guillaume, 75010 Paris (FR); FERRADANS, Sira, 75019 Paris (FR); MONTIER, Laurent, 69100 Villeurbanne (FR); TOUBHANS, Antoine, 41360 Epuisay (FR); FAY , Gilles, 75019 Paris (FR); CHAHOUR, Elkhansaa, 95870 Bezons (FR); TOUPET, Aurélien, 78590 Noisy-le-Roi (FR)
(74) Mandataire: Lavoix
(86) Numéro de dépôt international: PCT/FR2023/050501
(87) Numéro de publication internationale: WO 2023/194693

(56) Documents cités:
- WO-A1-2021/123197
- CA-A1- 3 118 067
- BÜNGER LAURA ET AL: "ROBOTIC WASTE SORTING", WORCESTER POLYTECHNIC INSTITUTE, 6 April 2021 (2021-04-06), pages 1 - 72, XP093357917, Retrieved from the Internet <URL:http://www.wpi.edu/Academics/Projects.>
- KOSKINOPOULOU MARIA ET AL: "Robotic Waste Sorting Technology: Toward a Vision-Based Categorization System for the Industrial Robotic Separation of Recyclable Waste", IEEE ROBOTICS & AUTOMATION MAGAZINE. IEEE SERVICE CENTER, PISCATAWAY, NJ., US, vol. 28, no. 2, 6 April 2021 (2021-04-06), pages 50 - 60, XP011860366, ISSN: 1070-9932, [retrieved on 20210611], DOI: 10.1109/MRA.2021.3066040
- SATHISH PAULRAJ GUNDUPALLI ET AL: "A review on automated sorting of source-separated municipal solid waste for recycling", WASTE MANAGEMENT., vol. 60, 20 September 2016 (2016-09-20), US, pages 56 - 74, XP055551300, ISSN: 0956-053X, DOI: 10.1016/j.wasman.2016.09.015

## Description

L'invention concerne un procédé d'estimation de la qualité d'un flux d'objets dans une ligne de tri.

Dans le cadre de cette invention, on se situe dans une ligne de tri d'objets, par exemple des objets d'emballage plastiques, d'objets en carton ou tout autre type de ligne de tri. Toutefois, de manière assez habituelle le tri de ces objets s'effectue en fonction des matériaux constitutifs de ces objets. C'est pourquoi on pourra parler dans la suite de la description de manière égale de tri de matériaux ou de tri d'objets, bien que comme il sera exposé ci-après, l'invention nécessite que des objets puissent être détectés sur la ligne de tri.

Dans le domaine du tri de matériau, une problématique bien connue est d'estimer la pureté d'un flux de matériau sortant d'une ligne de tri.

Les flux de matériaux triés étant ensuite recyclés, un taux de pureté massique élevé est relativement important.

La pratique habituelle consiste à effectuer des contrôles qualité aléatoires sur échantillon de matériau. Un opérateur prélève un échantillon ou défait une balle, certains matériaux étant conditionnés en balles pour expédition, et tri à la main les matériaux pour calculer le taux de pureté de l'ensemble.

Toutefois une telle pratique est non seulement fastidieuse, mais n'est pas particulièrement fiable, car elle est sensible à de potentielles erreurs de l'opérateur, et se base sur un faible nombre d'échantillons.

Afin d'automatiser la caractérisation des flux d'objets, en particulier de déchets, on connaît notamment la publication scientifique Gilles Pagès, Victor Reutenauer. Precision of caracterization of paper for recycling. 2019. hal-02388073*.* Toutefois la solution proposée dans cette publication, destinée à être appliquée aux papiers, ne permet pas d'obtenir une précision optimale, en particulier pour d'autres matériaux. En effet, cette publication décrit une caractérisation des types de papiers d'un flux de papiers, en prenant en compte la surface de couverture globale de la bande de convoyage par les différents types de papiers. Ceci fonctionne dans cet exemple car les différents types de papiers ont des valeurs de densité relativement uniformes. Toutefois pour d'autres matériaux, les variations de densité peuvent être beaucoup plus importantes, rendant ce modèle peu fiable. À titre d'exemple une bouteille de plastique écrasée est moins volumineuse et occupe moins d'espace sur la bande de convoyage qu'une même bouteille de plastique intacte, bien que toutes deux présentent une même masse.

CA3118067 A1 décrit un système d'analyse de déchets électroniques : une image du flux est acquise, les objets sont classés par type de composant, leur surface est mesurée, puis leur proportion massique est estimée à partir d'un poids supposé par unité de surface.

C'est pourquoi il existe le besoin d'obtenir un procédé d'estimation de la pureté d'un flux d'objets pouvant s'adapter à tout type d'objets d'une ligne de tri.

À cet effet, on propose un procédé d'estimation d'au moins un paramètre quantitatif d'un flux d'objets dans une ligne de tri d'objets comprenant une bande de convoyage du flux objets, chaque objet étant identifiable par au moins une propriété intrinsèque, la ligne de tri comprenant des organes de tri adaptés pour trier les objets en fonction d'au moins une propriété intrinsèque cible ; le procédé comprenant :
- Une étape de réception d'au moins une image du flux d'objets;
- Une étape de détection d'objets dans ladite au moins une image ;
- Une étape de classification de chaque objet détecté dans une liste de types d'objets préétablie ;
- Pour chaque objet détecté une étape de détermination de la propriété intrinsèque de l'objet classifié en fonction de sa classification dans la liste de types d'objets ; et
- une étape de calcul d'au moins une valeur du paramètre quantitatif du flux d'objets en fonction du comptage total d'objets détectés et du comptage d'objets détectés possédant une propriété intrinsèque correspondante à ladite au moins une propriété intrinsèque cible.

Ainsi on met en œuvre un procédé permettant de calculer un paramètre quantitatif d'un flux d'objets de manière fiable et adaptable à tout type de flux d'objets.

Ladite propriété intrinsèque comprend le matériau constitutif de l'objet. Cette propriété intrinsèque est la propriété la plus adaptée pour trier les objets dans une ligne de tri visant à produire un flux de matériau à recycler.

Avantageusement et de manière non limitative, ledit paramètre quantitatif est choisi parmi le pouvoir calorifique, la pureté massique, ou un taux de recyclabilité. Ainsi on peut définir un paramètre quantitatif relativement pertinent. La pureté massique est le paramètre quantitatif préféré dans la mise en œuvre de l'invention car ce paramètre est le paramètre principal quant à la qualité d'un flux de matériau. Le pouvoir calorifique ou le taux de recyclabilité sont deux autres paramètres quantitatifs, dont l'analyse est généralement plus complexe, mais que l'invention permet d'obtenir de manière relativement fiable.

Avantageusement et de manière non limitative, ladite étape de détermination comprend la mise en œuvre d'un système expert adapté pour déterminer pour chaque objet sa propriété intrinsèque, en fonction du type d'objet et de la propriété intrinsèque cible. Ainsi on peut déterminer la propriété intrinsèque de chaque objet, de manière fiable et rapide en temps de calcul.

Avantageusement et de manière non limitative, le procédé met en œuvre une étape de collecte d'au moins une valeur d'un autre paramètre quantitatif pour chaque type d'objet de la liste de types d'objets préétablie ; ladite étape de calcul d'au moins une valeur du paramètre quantitatif du flux d'objets étant alors fonction de la proportion d'objets du flux présentant une propriété intrinsèque correspondant à ladite au moins une propriété intrinsèque cible et de la valeur dudit autre paramètre quantitatif pour chaque type d'objet de la liste.

Ainsi, on met en œuvre le calcul du paramètre quantitatif du flux d'objets en tenant compte d'un autre paramètre quantitatif de chaque objet détecté, ce qui améliore la précision de l'estimation.

Avantageusement et de manière non limitative, ledit autre paramètre quantitatif de chaque type d'objet comprend sa masse. En effet, le poids de chaque objet est particulièrement pertinent, plus particulièrement, mais non exclusivement, lorsque le paramètre quantitatif est la pureté massique.

Avantageusement et de manière non limitative, l'étape de collecte d'au moins une valeur d'un dit autre paramètre quantitatif comprend, pour chaque type d'objet de la liste de types d'objets, le calcul de la valeur moyenne d'une pluralité de dits autres paramètres quantitatifs mesurés pour une pluralité d'objets appartenant audit type d'objet.

Ainsi, on associe à chaque type d'objet, aussi appelé dans la description une classe d'objets, une valeur moyenne du paramètre quantitatif, par exemple le poids moyen de la classe d'objets. Ceci permet d'obtenir une estimation améliorée du paramètre quantitatif du flux d'objet.

Avantageusement et de manière non limitative, chaque type d'objet de la liste de types d'objets préétablie comprend une pluralité de valeurs dudit autre paramètre quantitatif, correspondant à une pluralité de mesures dudit autre paramètre quantitatif d'une pluralité d'objets distincts appartenant à un même type d'objet ; et
l'étape de calcul d'au moins une valeur d'un paramètre quantitatif du flux d'objets mettant en œuvre un module statistique permettant d'obtenir un paramètre quantitatif simulé, fonction de la proportion d'objets du flux présentant une propriété intrinsèque correspondante à ladite au moins une propriété intrinsèque cible et de la pluralité de valeurs dudit autre paramètre quantitatif pour chaque type d'objet de la liste de type d'objets préétablie.

De cette manière le procédé met en œuvre une approche statistique permettant d'améliorer l'estimation du paramètre quantitatif du flux, en prenant en compte des mesures préalablement acquises d'une pluralité de paramètres quantitatifs de chaque type d'objet.

Avantageusement et de manière non limitative, l'étape de calcul d'au moins une valeur du paramètre quantitatif du flux d'objets met en œuvre ledit module statistique une pluralité de fois de sorte à obtenir, en fonction de la distribution des résultats, un intervalle de confiance des valeurs du paramètre quantitatif du flux d'objets.

Ainsi, en répétant une pluralité de fois le module statistique, on peut obtenir une distribution de résultats permettant d'établir un indice de confiance de l'estimation obtenue, ce qui améliore la qualité de l'estimation du paramètre quantitatif du flux.

Avantageusement et de manière non limitative, ledit module statistique comprend un module statistique de tirage avec remise, tel qu'une méthode *Bootstrap.*

Ainsi, on peut mettre en œuvre une approche statistique particulièrement pertinente lorsque nous possédons un grand nombre de données de mesures de paramètres quantitatifs d'objets de chaque type d'objet.

Avantageusement et de manière non limitative, l'étape de réception peut comprendre la réception d'au moins une image du flux d'objets depuis un serveur distant, par exemple dans le *cloud* ; un serveur installé sur un site de tri, un stockage de données portable, ou de tout autre moyen de fourniture de données connu.

Avantageusement et de manière non limitative, la ligne de tri comprend un dispositif d'acquisition d'images du flux d'objets convoyés.

Avantageusement et de manière non limitative, le dispositif d'acquisition d'images comprend une caméra optique ou un dispositif d'acquisition infrarouge ou proche infrarouge, ou un dispositif d'acquisition de rayons X.

Ainsi, on peut, en fonction du type de ligne de tri et d'objets cibles sélectionner un type de moyen d'acquisition d'image adapté pour fournir sur les images les informations de détection les plus pertinentes.

L'invention concerne aussi un dispositif d'estimation d'au moins un paramètre quantitatif d'un flux d'objets dans une ligne de tri d'objets comprenant une bande de convoyage du flux objets, chaque objet étant identifiable par au moins une propriété intrinsèque, la ligne de tri comprenant des organes de tri adaptés pour trier les objets en fonction d'au moins une propriété intrinsèque cible ; le dispositif comprenant :
- Des moyens de réception d'au moins une image du flux d'objets ;
- Des moyens de détection d'objets dans ladite au moins une image ;
- Des moyens de classification de chaque objet détecté dans une liste de types d'objets préétablie.
- Des moyens de détermination, pour chaque objet détecté, de la propriété intrinsèque de l'objet classifié en fonction de sa classification dans la liste de types d'objets ; et
- Des moyens de calcul d'au moins une valeur du paramètre quantitatif du flux d'objets en fonction de la proportion d'objets du flux possédant une propriété intrinsèque correspondante à ladite au moins une propriété intrinsèque cible.

L'invention concerne aussi une ligne de tri d'objets comprenant une bande de convoyage du flux objets, chaque objet étant identifiable par au moins une propriété intrinsèque, la ligne de tri comprenant des organes de tri adaptés pour trier les objets en fonction d'au moins une propriété intrinsèque cible, caractérisé en ce que ladite ligne de tri comprenant un dispositif d'estimation tel que décrit précédemment.

Avantageusement et de manière non limitative, la ligne de tri comprend un dispositif d'acquisition d'images du flux d'objets convoyés. En particulier le dispositif d'acquisition d'images du flux d'objets convoyés comprend une caméra optique ou un dispositif d'acquisition infrarouge ou proche infrarouge, ou un dispositif d'acquisition de rayons X.

D'autres particularités et avantages de l'invention ressortiront à la lecture de la description faite ci-après de trois modes de réalisation particuliers de l'invention, donnés à titre indicatif, mais non limitatifs, en référence aux dessins annexés sur lesquels :

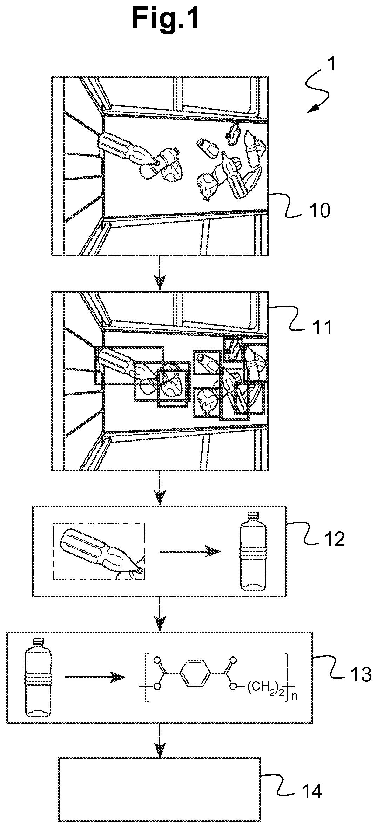

[Fig. 1] est un organigramme d'un procédé selon le premier mode de réalisation de l'invention ;
[Fig. 2] est une vue d'une ligne de tri d'objets vue depuis une caméra mise en œuvre par le procédé selon l'invention ;
[Fig. 3] est une vue d'une ligne de tri d'objets vue depuis une caméra mise en œuvre par le procédé selon l'invention et sur laquelle des objets ont été détectés et repérés par des boîtes d'encombrement ; et

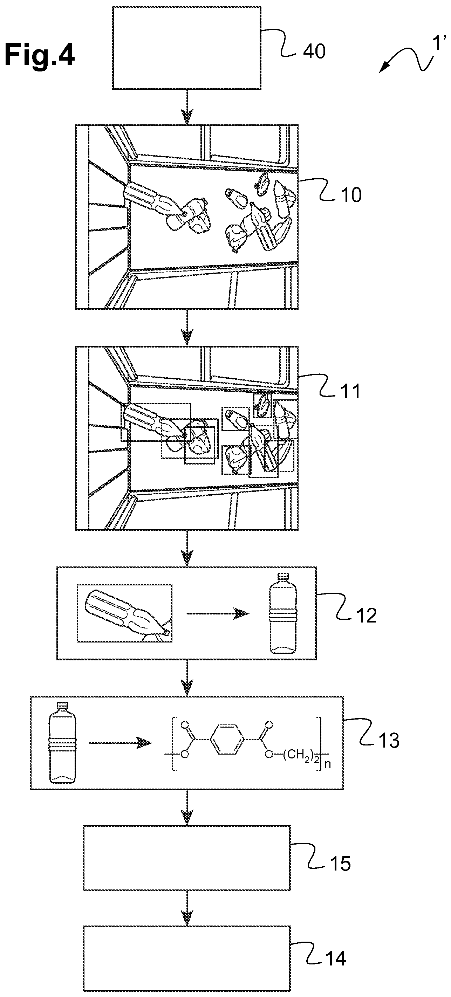

[Fig. 4] est un organigramme du procédé selon le premier et deuxième mode de réalisation de l'invention.

Une ligne de tri 2 de matériaux comprend une bande de convoyage 20 adaptée pour transporter un flux d'objets 21 à trier.

La ligne de tri 2 comprend généralement des moyens de tri des matériaux, non représentés, convoyés sur une première bande de convoyage, puis les matériaux tries sont convoyés vers des moyens d'assemblage de balles de matériaux.

Ces balles de matériaux sont classiquement des cubes de matériaux de plusieurs centaines de kilos destinées à être transportés dans des centres de recyclage.

Or, on sait que les exigences en termes de pureté du flux sont particulièrement importantes. À titre d'illustration, dans le domaine du tri des emballages plastiques, on cherche à obtenir une balle de Pet clair avec une pureté massique supérieure à 98 %.

Afin d'estimer automatiquement la pureté du flux d'objets triés, on installe après les moyens de tri, une caméra surplombant le flux convoyé avant qu'il ne soit stocké en vrac ou assemblé sous forme de balle de matériaux pour expédition.

L'objectif de la présente description n'est pas de décrire les différentes manières de monter et d'organiser une ligne de tri, sur un seul tapis de convoyage ou sur une pluralité de tapis de convoyage, l'invention pouvant être adaptée à tout type de ligne de tri, dès lors que l'on peut acquérir des images du flux après les moyens de tri et avant qu'il ne soit assemblé sous forme de balle de matériaux.

Afin d'estimer au moins un paramètre quantitatif du flux d'objets de la ligne de tri, on installe une caméra en surplomb de la bande de convoyage du flux dont on souhaite estimer la pureté.

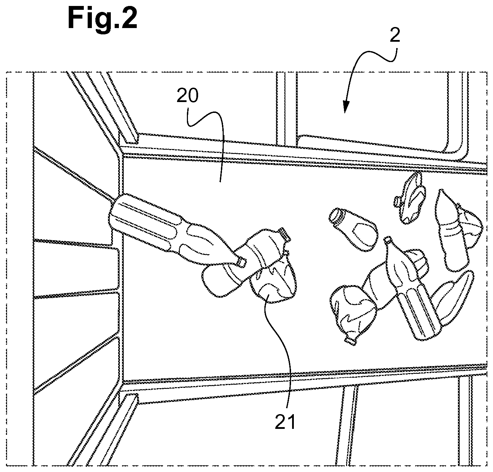

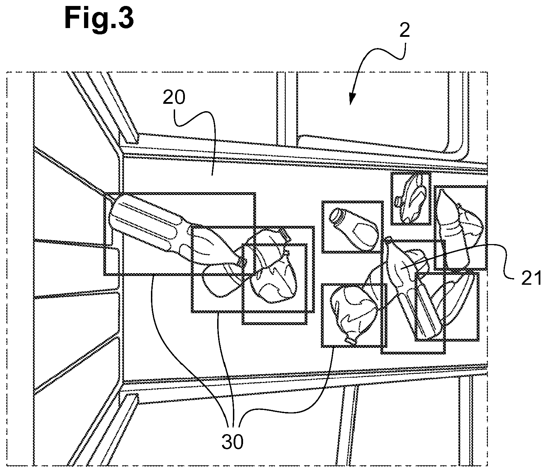

Cette caméra acquiert ainsi des images en continu du flux trié, tel que représenté figures 2 et 3, et les transmet à un dispositif d'estimation du paramètre quantitatif.

Ce dispositif d'estimation est ici un ordinateur, que l'on définit de manière standard comme étant un ensemble électronique comprenant un processeur, une mémoire de stockage, une mémoire vive, et des organes d'entrées-sorties, permettant notamment de recevoir les images de ladite caméra et d'afficher, imprimer, transmettre ou encore enregistrer l'estimation de pureté obtenue.

Afin d'estimer au moins un paramètre quantitatif du flux d'objet, le dispositif d'estimation met en œuvre un procédé 1 tel que décrit ci-après.

Dans le mode de réalisation principal de l'invention, le paramètre quantitatif estimé est la pureté massique du flux d'objets 21.

Toutefois l'invention n'est pas limitée à cet unique paramètre quantitatif. On peut notamment estimer la qualité du flux par d'autres types de paramètres quantitatifs tels que sa recyclabilité ou son pouvoir calorifique.

Le procédé 1 mis en œuvre permet d'estimer au moins un paramètre quantitatif, ici la pureté massique, du flux d'objets.

Toutefois on pourrait prévoir des modes de mises en œuvre alternatifs de l'invention dans lesquels le paramètre quantitatif serait notamment le pouvoir calorifique, un taux de recyclabilité ou d'autres paramètres utiles à l'homme du métier.

Chaque objet est identifiable par au moins une propriété intrinsèque, ici son matériau, et la ligne de tri comprend des organes de tri adaptés pour trier les objets en fonction d'au moins une propriété intrinsèque cible, par exemple un matériau attendu.

Aussi à titre d'exemple, on met en œuvre dans ce mode de réalisation une ligne de tri adaptée pour trier des déchets, ici des emballages plastiques, de sorte à séparer différentes matières plastiques, notamment les emballages en PET transparent, ceux en PET foncé, ceux en PET opaque et les Mix PE/PP/PS.

Il est bien connu qu'on appelle sous l'abréviation de PET le polyéthylène téréphtalate. En général la ligne de tri principale débouche sur plusieurs lignes secondaires de convoyage 2 des différents flux triés vers des organes d'assemblage des balles.

Dans ce contexte le procédé peut être mis en œuvre sur chaque ligne secondaire afin de déterminer la pureté de chaque flux produit, en fonction du matériau cible correspondant au matériau destiné à être transporté par cette ligne secondaire pour produire un flux conforme au cahier des charges d'une filière de reprise.

À cet effet, le procédé 1 comprend tout d'abord une étape de réception 10 du flux d'images de la caméra décrite précédemment.

Pour chaque image analysée, le procédé met en œuvre une étape de détection d'objets 11.

Pour ce faire, on implémente un module de détection d'objets, ici un module connu sous le nom de *You Only Look Once,* généralement abrégé YOLO.

Ce module de détection d'objet en temps réel est connu notamment par la publication scientifique initiale : You Only Look Once: Unified, Real-Time Object Detection, Joseph Redmon, Santosh Divvala, Ross Girshick, Ali Farhadi; Proceedings of the IEEE Conference on Computer Vision and Pattern Recognition (CVPR), 2016, pp. 779-788.

Cette manière de détection d'objet est particulièrement adaptée à la détection en temps réel et permet notamment de détecter des objets dans un flux vidéo.

En effet, s'il est ici décrit le procédé comme étant une succession d'acquisition d'images, l'invention peut être mise en œuvre pour un flux vidéo, vu comme une succession rapide d'images.

Dans un flux vidéo, il peut être avantageux de ne pas compter en double un même objet détecté entre deux images.

La méthode de détection d'objet est avantageusement adaptée à identifier non seulement un objet dans une image, mais à l'associer à un même objet identifié dans l'image précédente, de sorte à relier un même objet entre deux images et à lui attribuer un identifiant unique.

Cette méthode de suivi *(tracking* en anglais) permet d'effectuer un suivi en temps réel d'un flux d'objet.

Cependant, le fait de compter plusieurs fois un même objet n'est pas forcément un problème si tous les objets sont comptés plusieurs fois de manière similaire, de sorte qu'il n'est pas indispensable de mettre en place des étapes de suivi en temps réel. Par conséquent, le *tracking* des objets du flux n'est pas indispensable au bon fonctionnement du procédé.

De plus, l'invention n'est pas limitée à un tel suivi temps-réel. Des prises de vues espacées dans le temps selon une période définie de sorte que chaque image comprend un nouvel ensemble d'objets convoyé du flux, et de sorte que tous les objets du flux apparaissent sur une image acquise, peut aussi être mise en œuvre. Toutefois une telle approche séquentielle peut produire des erreurs de détections contrairement à une analyse en temps réel.

L'invention n'est pas limitée au module de détection d'objets YOLO, mais peut mettre en œuvre toute autre méthode de détection.

Toutefois le module YOLO, qui met en œuvre un réseau de neurones convolutif offre des performances importantes qui permettent une détection en temps réel particulièrement robuste.

Dans ce mode de réalisation le module YOLO permet d'obtenir pour chaque image analysée des boîtes d'encombrement 30 comprenant un objet détecté, tel que représenté figure 3.

Une fois les boîtes d'encombrement 30 obtenues pour une image on met en œuvre une étape de classification 12 de chaque objet détecté.

On transmet ensuite l'image acquise, en indiquant les coordonnées de l'objet à détecter, notamment sous la forme de coordonnées de la boîte d'encombrement 30 dans laquelle l'objet a été détecté.

Au cours d'une mise en œuvre alternative de l'invention, on procède à une étape de découpage de l'image de sorte à isoler chaque boîte d'encombrement 30 de l'image.

Ceci permet ensuite d'envoyer dans un module de classification chaque objet détecté en ne donnant en entrée que la portion d'image comprise dans la boîte d'encombrement 30 associée.

L'étape de classification 12 met en œuvre dans le mode de réalisation principal de l'invention un autre module de réseau de neurones, ici ResNet, connu notamment de la publication scientifique He, Kaiming, Xiangyu Zhang, Shaoqing Ren, and Jian Sun. Deep residual learning for image recognition. In Proceedings of the IEEE conference on computer vision and pattern recognition, pp. 770-778. 2016.

En particulier on peut mettre en œuvre l'implémentation à 50 couches (*loyers*) dite ResNet-50.

Toutefois l'invention n'est pas limitée à cet unique module de classification, on peut notamment mettre en œuvre d'autres implémentations à base de réseau de neurones, mais aussi d'autres méthodes telle que des méthodes de régressions linéaires, des méthodes d'arbres décisionnels ou toute autre méthode connue de l'homme du métier.

Ainsi, on obtient pour chaque objet détecté dans l'image une classe d'objets qui lui est attribuée.

À titre d'exemple une liste de classes, aussi appelées types d'objets, pour des objets d'un flux d'emballages plastique peut comprendre les éléments suivants :

| | |
|---|---|
| 1 | Barquette plastique opaque |
| 2 | Barquette plastique transparente |
| 3 | Bouchon plastique |
| 4 | Bouteille plastique autre |
| 5 | Bouteille plastique opaque |
| 6 | Bouteille plastique opaque alimentaire |
| 7 | Bouteille plastique opaque boisson |
| 8 | Bouteille plastique opaque hygiène |
| 9 | Bouteille plastique opaque ménage |
| 10 | Bouteille plastique teinte |
| 11 | Bouteille plastique teinte boisson |
| 12 | Bouteille plastique transparente |
| 13 | Bouteille plastique transparente boisson |
| 14 | Bouteille plastique transparente hygiène |
| 15 | Bouteille plastique transparente ménage |
| 16 | Bouteille plastique transparente mat |
| 17 | Brique alimentaire |
| 18 | Carton |
| 19 | Couvercle plastique opaque |
| 20 | Couvercle plastique transparent |
| 21 | *Cutoff* (objet ne pouvant être identifié car non visible entièrement dans l'image, par exemple car disposé sur le bord de l'image et coupé) |
| 22 | Étiquette |
| 23 | Feuille papier |
| 24 | Métal autre |
| 25 | Plastique opaque |
| 26 | Plastique transparent |
| 27 | Plastique transparent mat |
| 28 | Tube plastique |
| 29 | Inconnu (Objets identifiables, mais de classes inconnues) |

Ensuite on met en œuvre une étape de détermination 13 d'une propriété intrinsèque de l'objet en fonction de sa classe.

Dans ce mode de réalisation, la propriété intrinsèque de l'objet est son matériau.

Cette étape de détermination 13 est ici mise en œuvre par l'implémentation d'un système expert, adapté pour déterminer en fonction d'un objet et de sa classe, son matériau.

Toutefois il n'est pas toujours possible de déterminer avec exactitude le matériau en fonction de la classe d'objet.

C'est pourquoi le système expert prend aussi en compte le matériau cible.

À titre illustratif, lorsqu'une bouteille, par exemple opaque, est détectée, il n'est pas toujours possible de déterminer exactement s'il s'agit de Mix PE/PP/PS ou de PET foncé. Afin de procéder à cette détection, le système expert saura décider en fonction du matériau cible de la ligne, ou de la ligne secondaire comme expliqué précédemment, sur laquelle se trouve le matériau. En effet, si l'objet se trouve sur une ligne à matériau cible PET foncé, alors il est probable qu'il s'agisse de ce matériau. A contrario si la ligne est une ligne dite mixte, recevant notamment des Mix PE/PP/PS, alors c'est probablement l'un de ces matériaux qui constituera la bouteille.

On entend par Mix PE-PP-PS des lignes d'objets, tels que des bouteilles, flacons, pots, en polyéthylène haute densité PE, polypropylène PP et polystyrène PS.

Par exemple, en fonction des classes obtenues précédemment, le système expert est alors apte à déterminer le matériau dans une liste comprenant notamment :

| | |
|---|---|
| 1 | EMR (Emballages Ménagers Recyclables) |
| 2 | Métal |
| 3 | Papier |
| 4 | Mix PE/PP/PS |
| 5 | PET clair |
| 6 | PET foncé |
| 7 | Refus |
| 8 | Matériau de brique alimentaire |
| 9 | Inconnu |

Ces matériaux de la liste peuvent être combinés dans le cadre du système expert. En effet, l'objectif est principalement de déterminer si l'objet est un objet fait du matériau cible ou non. Ainsi, en fonction de la ligne sur laquelle le procédé est mis en œuvre, la liste de matériau peut être réduite et simplifiée.

Il est bien connu qu'un système expert comprend un moteur d'inférence, un ensemble de règles et une base de connaissances.

La mise en œuvre d'un système expert est ici justifiée par le fait que l'association entre une classe d'objets et son matériau répond à une problématique logique pouvant être résolue de manière relativement efficace par un système expert dès lors que la base de connaissance est suffisamment fournie et que les règles sont bien établies.

D'autres méthodes pourraient être mises en œuvre, par exemple des méthodes d'apprentissage automatique, telles que des méthodes de régression linéaires, d'arbres de décision ou toute autre méthode du domaine de l'apprentissage automatique adaptée.

Ainsi, on peut obtenir pour chaque objet détecté dans l'image, sa classe et son matériau.

On procède alors ensuite à une étape de calcul 14 d'au moins une valeur de paramètre quantitatif du flux, ici sa pureté massique, en fonction de la proportion d'objets du flux possédant une propriété intrinsèque, son matériau, correspondant à ladite au moins une propriété intrinsèque cible, ici le matériau cible de la ligne de tri

À cet effet selon le mode de réalisation principal de l'invention, l'étape comprend le calcul du taux de pureté massique du flux, en calculant la proportion d'objets du flux d'objet faits du matériau cible.

Ainsi, on estime la pureté massique du flux comme étant la proportion d'objets faits du ou des matériaux cibles par rapport au nombre total d'objets détectés.

Cette méthode principale fonctionne relativement bien pour des lignes de tri faites de matériaux plastiques ou de papier, par exemple dans les lignes de tri d'emballages plastiques, car le poids de chaque objet est sensiblement le même, en particulier compte tenu de la masse totale de matériau formant la balle.

Selon un deuxième mode de réalisation de l'invention le procédé 1' diffère du premier mode de réalisation par l'étape de calcul 14.

En effet, dans ce deuxième mode de réalisation, on met avant l'étape de calcul 14, une étape d'attribution 15 d'une masse à chaque objet détecté.

À cet effet, on a mis en œuvre de manière préliminaire au procédé 1', une étape de collecte 40 au cours de laquelle une pluralité d'objets d'une même classe a été pesée.

Dans ce deuxième mode de réalisation, l'étape de collecte procède aussi au calcul de la moyenne des masses obtenues pour des objets d'une même classe. Autrement dit, on calcule un poids moyen de chaque classe d'objets. Plus le nombre d'objets pesés est grand, plus la valeur de masse moyenne est fiable.

Lors de l'étape de calcul 14, on calcule la proportion en masses des objets faits du ou des matériaux cibles par rapport à la masse totale des objets détectés.

Autrement dit on calcule la pureté massique comme étant la somme des poids des objets faits du ou des matériaux cibles divisée par la somme des masses de tous les objets du flux détectés.

Ceci permet ainsi d'obtenir une pureté massique particulièrement fiable, mais nécessite une étape de constitution de masses préalable relativement longue et nécessitant l'accès à de nombreuses données d'analyse.

Selon un troisième mode de réalisation de l'invention, le procédé 1' diffère des premiers et deuxièmes modes de réalisation par l'étape de calcul 14.

Dans ce troisième mode de réalisation, l'objectif de l'étape de calcul 14 n'est plus de déterminer une valeur unique de pureté massique, ou de tout autre paramètre quantitatif du flux trié, mais associer cette valeur à un intervalle de confiance.

À cet effet, on a mis en œuvre de manière préalable, une étape de collecte 40 des masses d'une pluralité d'objets associés à une classe de la liste de classe précédente.

Contrairement au deuxième mode de réalisation de l'invention, cette étape de collecte ne calcule pas une valeur moyenne, mais bien une collection de différents poids.

Pour ce faire, une pluralité d'objets d'une même classe a été pesée, et chaque valeur pesée est enregistrée et associée à la classe de l'objet. Plus le nombre d'objets pesés est grand, plus on aura associé de masses à une classe d'objet.

Ainsi, lors d'une étape d'attribution 15 d'une masse à chaque objet détecté mise en œuvre avant l'étape de calcul, on simule d'une part la masse de la balle et d'autre part la masse des objets faits du matériau cible, de sorte à calculer la pureté massique de cette balle, par une méthode d'inférence statistique par tirage avec remise.

Ici on met en œuvre une méthode *Bootstrap,* bien connue dans le domaine des statistiques.

Cette méthode se base sur le tirage aléatoire de valeurs de masses pour chaque objet détecté parmi l'ensemble des masses associées à chaque classe d'objets.

Plus la quantité de données de masses associées à chaque classe d'objets est importante plus la qualité d'une telle méthode statistique est performante. A contrario, l'intérêt de cette méthode décroît pour de faibles nombres de pesées mémorisées, par exemple en dessous de 100 valeurs de masses par classe d'objet.

La pureté massique est alors calculée comme étant le rapport entre cette masse totale simulée des objets faits du matériau cible par la masse simulée de la balle de matériau, autrement dit la masse de tous les objets détectés.

On procède à une répétition de cette simulation une pluralité de fois, par exemple entre 100 et 2000 itérations, afin de multiplier les simulations.

Le nombre d'itérations sera aussi calibré en fonction du nombre de pesées associé à chaque classe d'objets. Plus le nombre de pesées sera élevé plus on pourra effectuer d'itérations.

La distribution des puretés simulées obtenues permet ainsi de calculer un intervalle de confiance de la valeur de pureté massique du flux d'objets détectés.

## Revendications

1. Procédé (1, 1') d'estimation d'au moins un paramètre quantitatif d'un flux d'objets (21) dans une ligne de tri (2) d'objets comprenant une bande de convoyage (20) du flux objets, chaque objet étant identifiable par au moins une propriété intrinsèque, la ligne de tri (2) comprenant des organes de tri adaptés pour trier les objets en fonction d'au moins une propriété intrinsèque cible ; le procédé (1, 1') comprenant :
- Une étape de réception (10) d'au moins une image du flux d'objets ;
- Une étape de détection (11) d'objets dans ladite au moins une image ;
- Une étape de classification (12) de chaque objet détecté dans une liste de types d'objets préétablie ;
- Pour chaque objet détecté une étape de détermination (13) de la propriété intrinsèque de l'objet classifié en fonction de sa classification dans la liste de types d'objets; et
- une étape de calcul (14) d'au moins une valeur du paramètre quantitatif du flux d'objets en fonction du comptage total d'objets détectés et du comptage d'objets détectés possédant une propriété intrinsèque correspondante à ladite au moins une propriété intrinsèque cible ;
**caractérisé en ce que**
ladite propriété intrinsèque comprend le matériau constitutif de l'objet.

2. Procédé (1, 1') selon la revendication 1, **caractérisé en ce que** ledit paramètre quantitatif est choisi parmi le pouvoir calorifique, la pureté massique, ou un taux de recyclabilité.

3. Procédé selon l'une quelconque des revendications 1 à 2, **caractérisé en ce que** ladite étape de détermination (13) comprend la mise en œuvre d'un système expert adapté pour déterminer pour chaque objet sa propriété intrinsèque, en fonction du type d'objet et de la propriété intrinsèque cible.

4. Procédé (1') selon l'une quelconque des revendications 1 à 3, **caractérisé en ce qu'**il met en œuvre une étape de collecte (40) d'au moins une valeur d'un autre paramètre quantitatif pour chaque type d'objet de la liste de types d'objets préétablie ;
ladite étape de calcul (14) d'au moins une valeur du paramètre quantitatif du flux d'objets étant alors fonction de la proportion d'objets du flux présentant une propriété intrinsèque correspondant à ladite au moins une propriété intrinsèque cible et de la valeur dudit autre paramètre quantitatif pour chaque type d'objet de la liste.

5. Procédé (1') selon la revendication 4, **caractérisé en ce que** ledit autre paramètre quantitatif de chaque type d'objet comprend sa masse.

6. Procédé selon la revendication 4 ou 5, **caractérisé en ce que** l'étape de collecte (40) d'au moins une valeur d'un dit autre paramètre quantitatif comprend, pour chaque type d'objet de la liste de types d'objets, le calcul de la valeur moyenne d'une pluralité de dits autres paramètres quantitatifs mesurés pour une pluralité d'objets appartenant audit type d'objet.

7. Procédé (1') selon l'une quelconque des revendications 4 ou 5 dans lequel chaque type d'objet de la liste de types d'objets préétablie comprend une pluralité de valeurs dudit autre paramètre quantitatif, correspondant à une pluralité de mesures dudit autre paramètre quantitatif d'une pluralité d'objets distincts appartenant à un même type d'objet ; et
l'étape de calcul (14) d'au moins une valeur d'un paramètre quantitatif du flux d'objets mettant en œuvre un module statistique permettant d'obtenir un paramètre quantitatif simulé, fonction de la proportion d'objets du flux présentant une propriété intrinsèque correspondante à ladite au moins une propriété intrinsèque cible et de la pluralité de valeurs dudit autre paramètre quantitatif pour chaque type d'objet de la liste de type d'objets préétablie.

8. Procédé selon la revendication 7, **caractérisé en ce que** l'étape de calcul (14) d'au moins une valeur du paramètre quantitatif du flux d'objets met en œuvre ledit module statistique une pluralité de fois de sorte à obtenir, en fonction de la distribution des résultats, un intervalle de confiance des valeurs du paramètre quantitatif du flux d'objets.

9. Procédé selon la revendication 8 **caractérisé en ce que** ledit module statistique comprend un module statistique de tirage avec remise, tel qu'une méthode *Bootstrap.*

10. Procédé selon l'une quelconque des revendications 1 à 9, **caractérisé en ce que** l'étape de réception (10) peut comprendre la réception d'au moins une image du flux d'objets depuis un serveur distant, ou un serveur installé sur un site de tri, un stockage de données portable

11. Procédé selon l'une quelconque des revendications 1 à 9, **caractérisé en ce que** la ligne de tri (2) comprend un dispositif d'acquisition d'images du flux d'objets convoyés.

12. Procédé selon la revendication 11, **caractérisé en ce que** le dispositif d'acquisition d'images du flux d'objets convoyés comprend une caméra optique ou un dispositif d'acquisition infrarouge ou proche infrarouge, ou un dispositif d'acquisition de rayons X.

13. Dispositif d'estimation d'au moins un paramètre quantitatif d'un flux d'objets (21) dans une ligne de tri (2) d'objets comprenant une bande de convoyage (20) du flux objets, chaque objet étant identifiable par au moins une propriété intrinsèque, la ligne de tri (2) comprenant des organes de tri adaptés pour trier les objets en fonction d'au moins une propriété intrinsèque cible ; le dispositif comprenant :
- Des moyens de réception d'au moins une image du flux d'objets ;
- Des moyens de détection d'objets dans ladite au moins une image ;
- Des moyens de classification de chaque objet détecté dans une liste de types d'objets préétablie.
- Des moyens de détermination, pour chaque objet détecté, de la propriété intrinsèque de l'objet classifié en fonction de sa classification dans la liste de types d'objets; et
- Des moyens de calcul d'au moins une valeur du paramètre quantitatif du flux d'objets en fonction de la proportion d'objets du flux possédant une propriété intrinsèque correspondante à ladite au moins une propriété intrinsèque cible ;
**caractérisé en ce que**
ladite propriété intrinsèque comprend le matériau constitutif de l'objet.

14. Ligne de tri d'objets comprenant une bande de convoyage (20) du flux objets, chaque objet étant identifiable par au moins une propriété intrinsèque, la ligne de tri (2) comprenant des organes de tri adaptés pour trier les objets en fonction d'au moins une propriété intrinsèque cible, **caractérisé en ce que** ladite ligne de tri comprend un dispositif d'estimation selon la revendication 13.

## Patentansprüche

1. Verfahren (1, 1') zur Schätzung mindestens eines quantitativen Parameters eines Objektstroms (21) in einer Objektsortierlinie (2), umfassend ein Förderband (20) für den Objektstrom, wobei jedes Objekt durch mindestens eine intrinsische Eigenschaft identifizierbar ist, wobei die Sortierlinie (2) Sortierorgane umfasst, die dazu geeignet sind, die Objekte in Abhängigkeit von mindestens einer intrinsischen Zieleigenschaft zu sortieren; wobei das Verfahren (1, 1') umfasst:
- einen Schritt des Empfangens (10) mindestens eines Bildes des Objektstroms;
- einen Schritt des Detektierens (11) von Objekten in dem mindestens einen Bild;
- einen Schritt des Klassifizierens (12) jedes detektierten Objekts in einer vorab festgelegten Liste von Objekttypen;
- für jedes detektierte Objekt einen Schritt des Bestimmens (13) der intrinsischen Eigenschaft des klassifizierten Objekts in Abhängigkeit von seiner Klassifizierung in der Liste von Objekttypen; und
- einen Schritt des Berechnens (14) mindestens eines Werts des quantitativen Parameters des Objektstroms in Abhängigkeit von der Gesamtzählung detektierter Objekte und der Zählung detektierter Objekte, die eine intrinsische Eigenschaft besitzen, welche der mindestens einen intrinsischen Zieleigenschaft entspricht; **dadurch gekennzeichnet, dass** die intrinsische Eigenschaft das Material umfasst, aus dem das Objekt besteht.

2. Verfahren (1, 1') nach Anspruch 1, **dadurch gekennzeichnet, dass** der quantitative Parameter ausgewählt ist aus dem Heizwert, der Massenreinheit oder einem Recyclingfähigkeitsgrad.

3. Verfahren nach einem der Ansprüche 1 bis 2, **dadurch gekennzeichnet, dass** der Schritt des Bestimmens (13) das Einsetzen eines Expertensystems umfasst, das dazu geeignet ist, für jedes Objekt seine intrinsische Eigenschaft in Abhängigkeit von dem Objekttyp und der intrinsischen Zieleigenschaft zu bestimmen.

4. Verfahren (1') nach einem der Ansprüche 1 bis 3, **dadurch gekennzeichnet, dass** es einen Schritt des Sammelns (40) mindestens eines Werts eines anderen quantitativen Parameters für jeden Objekttyp der vorab festgelegten Liste von Objekttypen einsetzt;
wobei der Schritt des Berechnens (14) mindestens eines Werts des quantitativen Parameters des Objektstroms dann eine Funktion des Anteils von Objekten des Stroms ist, die eine intrinsische Eigenschaft aufweisen, welche der mindestens einen intrinsischen Zieleigenschaft entspricht, und des Werts des anderen quantitativen Parameters für jeden Objekttyp der Liste.

5. Verfahren (1') nach Anspruch 4, **dadurch gekennzeichnet, dass** der andere quantitative Parameter jedes Objekttyps seine Masse umfasst.

6. Verfahren nach Anspruch 4 oder 5, **dadurch gekennzeichnet, dass** der Schritt des Sammelns (40) mindestens eines Werts eines besagten anderen quantitativen Parameters für jeden Objekttyp der Liste von Objekttypen die Berechnung des Mittelwerts einer Vielzahl von besagten anderen quantitativen Parametern umfasst, die für eine Vielzahl von Objekten gemessen werden, welche dem besagten Objekttyp angehören.

7. Verfahren (1') nach einem der Ansprüche 4 oder 5, bei dem jeder Objekttyp der vorab festgelegten Liste von Objekttypen eine Vielzahl von Werten des anderen quantitativen Parameters umfasst, die einer Vielzahl von Messungen des anderen quantitativen Parameters einer Vielzahl unterschiedlicher Objekte entsprechen, die demselben Objekttyp angehören; und
wobei der Schritt des Berechnens (14) mindestens eines Werts eines quantitativen Parameters des Objektstroms ein statistisches Modul einsetzt, das ermöglicht, einen simulierten quantitativen Parameter zu erhalten, der eine Funktion des Anteils von Objekten des Stroms ist, die eine intrinsische Eigenschaft aufweisen, welche der mindestens einen intrinsischen Zieleigenschaft entspricht, und der Vielzahl von Werten des anderen quantitativen Parameters für jeden Objekttyp der vorab festgelegten Liste von Objekttypen.

8. Verfahren nach Anspruch 7, **dadurch gekennzeichnet, dass** der Schritt des Berechnens (14) mindestens eines Werts des quantitativen Parameters des Objektstroms das statistische Modul mehrfach einsetzt, um in Abhängigkeit von der Verteilung der Ergebnisse ein Konfidenzintervall der Werte des quantitativen Parameters des Objektstroms zu erhalten.

9. Verfahren nach Anspruch 8, **dadurch gekennzeichnet, dass** das statistische Modul ein statistisches Ziehungsmodul mit Zurücklegen umfasst, wie ein *Bootstrap-*Verfahren.

10. Verfahren nach einem der Ansprüche 1 bis 9, **dadurch gekennzeichnet, dass** der Schritt des Empfangens (10) den Empfang mindestens eines Bildes des Objektstroms von einem entfernten Server, von einem auf einer Sortieranlage installierten Server oder von einem tragbaren Datenspeicher umfassen kann.

11. Verfahren nach einem der Ansprüche 1 bis 9, **dadurch gekennzeichnet, dass** die Sortierlinie (2) eine Bilderfassungsvorrichtung für den geförderten Objektstrom umfasst.

12. Verfahren nach Anspruch 11, **dadurch gekennzeichnet, dass** die Bilderfassungsvorrichtung für den geförderten Objektstrom eine optische Kamera oder eine Infrarot- oder Nahinfrarot-Erfassungsvorrichtung oder eine Röntgen-Erfassungsvorrichtung umfasst.

13. Vorrichtung zur Schätzung mindestens eines quantitativen Parameters eines Objektstroms (21) in einer Objektsortierlinie (2), umfassend ein Förderband (20) für den Objektstrom, wobei jedes Objekt durch mindestens eine intrinsische Eigenschaft identifizierbar ist, wobei die Sortierlinie (2) Sortierorgane umfasst, die dazu geeignet sind, die Objekte in Abhängigkeit von mindestens einer intrinsischen Zieleigenschaft zu sortieren; wobei die Vorrichtung umfasst:
- Mittel zum Empfangen mindestens eines Bildes des Objektstroms;
- Mittel zum Detektieren von Objekten in dem mindestens einen Bild;
- Mittel zum Klassifizieren jedes detektierten Objekts in einer vorab festgelegten Liste von Objekttypen.
- Mittel zum Bestimmen, für jedes detektierte Objekt, der intrinsischen Eigenschaft des klassifizierten Objekts in Abhängigkeit von seiner Klassifizierung in der Liste von Objekttypen; und
- Mittel zum Berechnen mindestens eines Werts des quantitativen Parameters des Objektstroms in Abhängigkeit von dem Anteil von Objekten des Stroms, die eine intrinsische Eigenschaft besitzen, welche der mindestens einen intrinsischen Zieleigenschaft entspricht; **dadurch gekennzeichnet, dass** die intrinsische Eigenschaft das Material umfasst, aus dem das Objekt besteht.

14. Objektsortierlinie, umfassend ein Förderband (20) für den Objektstrom, wobei jedes Objekt durch mindestens eine intrinsische Eigenschaft identifizierbar ist, wobei die Sortierlinie (2) Sortierorgane umfasst, die dazu geeignet sind, die Objekte in Abhängigkeit von mindestens einer intrinsischen Zieleigenschaft zu sortieren, **dadurch gekennzeichnet, dass** die Sortierlinie eine Schätzvorrichtung nach Anspruch 13 umfasst.

## Claims

1. Method (1, 1') for estimating at least one quantitative parameter of a flow of objects (21) in an object sorting line (2) comprising a conveyor belt (20) for conveying the flow of objects, each object being identifiable by at least one intrinsic property, the sorting line (2) comprising sorting means adapted to sort the objects as a function of at least one target intrinsic property; the method (1, 1') comprising:
- A step (10) of receiving at least one image of the flow of objects;
- A step (11) of detecting objects in said at least one image;
- A step (12) of classifying each detected object in a pre-established list of object types;
- For each detected object, a step (13) of determining the intrinsic property of the classified object as a function of its classification in the list of object types; and
- a step (14) of calculating at least one value of the quantitative parameter of the flow of objects as a function of the total count of detected objects and of the count of detected objects having an intrinsic property corresponding to said at least one target intrinsic property; **characterized in that** said intrinsic property comprises the constituent material of the object.

2. Method (1, 1') according to claim 1, **characterized in that** said quantitative parameter is selected from calorific value, mass purity, or a recyclability rate.

3. Method according to any one of claims 1 to 2, **characterized in that** said determining step (13) comprises implementing an expert system adapted to determine, for each object, its intrinsic property, as a function of the object type and of the target intrinsic property.

4. Method (1') according to any one of claims 1 to 3, **characterized in that** it implements a step (40) of collecting at least one value of another quantitative parameter for each object type in the pre-established list of object types;
said step (14) of calculating at least one value of the quantitative parameter of the flow of objects then being a function of the proportion of objects in the flow having an intrinsic property corresponding to said at least one target intrinsic property and of the value of said other quantitative parameter for each object type in the list.

5. Method (1') according to claim 4, **characterized in that** said other quantitative parameter of each object type comprises its mass.

6. Method according to claim 4 or 5, **characterized in that** the step (40) of collecting at least one value of a said other quantitative parameter comprises, for each object type in the list of object types, calculating the average value of a plurality of said other quantitative parameters measured for a plurality of objects belonging to said object type.

7. Method (1') according to any one of claims 4 or 5, wherein each object type in the pre-established list of object types comprises a plurality of values of said other quantitative parameter, corresponding to a plurality of measurements of said other quantitative parameter of a plurality of distinct objects belonging to the same object type; and
the step (14) of calculating at least one value of a quantitative parameter of the flow of objects implementing a statistical module enabling a simulated quantitative parameter to be obtained, as a function of the proportion of objects in the flow having an intrinsic property corresponding to said at least one target intrinsic property and of the plurality of values of said other quantitative parameter for each object type in the pre-established list of object types.

8. Method according to claim 7, **characterized in that** the step (14) of calculating at least one value of the quantitative parameter of the flow of objects implements said statistical module a plurality of times so as to obtain, as a function of the distribution of the results, a confidence interval of the values of the quantitative parameter of the flow of objects.

9. Method according to claim 8, **characterized in that** said statistical module comprises a statistical sampling-with-replacement module, such as a *Bootstrap* method.

10. Method according to any one of claims 1 to 9, **characterized in that** the receiving step (10) may comprise receiving at least one image of the flow of objects from a remote server, from a server installed at a sorting site or from a portable data storage device

11. Method according to any one of claims 1 to 9, **characterized in that** the sorting line (2) comprises an image acquisition device for the conveyed flow of objects.

12. Method according to claim 11, **characterized in that** the image acquisition device for the conveyed flow of objects comprises an optical camera or an infrared or near-infrared acquisition device, or an X-ray acquisition device.

13. Device for estimating at least one quantitative parameter of a flow of objects (21) in an object sorting line (2) comprising a conveyor belt (20) for conveying the flow of objects, each object being identifiable by at least one intrinsic property, the sorting line (2) comprising sorting means adapted to sort the objects as a function of at least one target intrinsic property; the device comprising:
- Means for receiving at least one image of the flow of objects;
- Means for detecting objects in said at least one image;
- Means for classifying each detected object in a pre-established list of object types.
- Means for determining, for each detected object, the intrinsic property of the classified object as a function of its classification in the list of object types; and
- Means for calculating at least one value of the quantitative parameter of the flow of objects as a function of the proportion of objects in the flow having an intrinsic property corresponding to said at least one target intrinsic property; **characterized in that** said intrinsic property comprises the constituent material of the object.

14. Object sorting line comprising a conveyor belt (20) for conveying the flow of objects, each object being identifiable by at least one intrinsic property, the sorting line (2) comprising sorting means adapted to sort the objects as a function of at least one target intrinsic property, **characterized in that** said sorting line comprises an estimation device according to claim 13.
